# EUROPEAN PATENT APPLICATION

(11) **EP 2 642 378 A1**
(43) Date of publication of application: **25.09.2013**
(21) Application number: 13155172.3
(22) Date of filing: 14.02.2013
(51) Int. Cl.: G06F 3/0488, G06F 3/041, G06F 3/044

(54) **Method and apparatus for detecting touch**

(30) Priority: 23.03.2012 KR 20120029941
(71) Applicant: Samsung Electronics Co., Ltd, Gyeonggi-do 443-742 (KR)
(72) Inventor: Jung, Woo-Jin, 443-742 Gyeonggi-do (KR); Hong, Hyun-Su, 443-742 Gyeonggi-do (KR)
(74) Representative: Gover, Richard Paul

(57) **Abstract**

Method and apparatus for detecting touches on a capacitive touchscreen, whether the touchscreen is grounded or floating. The method includes detecting a user touch input; generating touch data based on a change in capacitance of the touchscreen caused by the touch input; and, based on the touch data, calculating first data (such as the X-Y coordinates of the touch point) using a predetermined first threshold and calculating second data (such as the area and/or the angle of the touch) using a predetermined second threshold, which may be lower than the first threshold.

## Description

### BACKGROUND OF THE INVENTION

### Field of the Invention

The present invention relates to a method of detecting touch inputs from a user through a touch-screen of a portable terminal, and more particularly, to a method and apparatus for detecting touches, by which touch inputs from a user are smoothly detected no matter what state the touch screen is in.

### Description of the Related Art

Today, portable terminals, such as mobile communication terminals, personal digital assistants (PDAs), smart phones, etc. for providing various functions have become more popular.

As the portable terminal provides various functions such as wireless Internet, electronic notebook, multimedia capture/play, gaming functions, etc., in addition to a basic communication function, a more diverse input device is demanded. In addition to this demand, touch-screens having input and display units implemented in a single device are widely used in small terminals, such as portable terminals. The touch-screens are classified into any of capacitive overlay, resistive overlay, surface acoustic wave, transmitter, and infrared beam types, etc. Among them, the usage of capacitive overlay type touch-screens has been on the rise with development of a user interface using multi-touches.

For the capacitive overlay type touch-screen, if the touch-screen is not grounded, i.e., the touch-screen is floating, an amount of change in capacitance is noticeably small compared with a case the touch-screen is grounded. This causes the portable terminal to fail to recognize touch inputs even when touch inputs to the portable terminal are received through the touch-screen from a user. In particular, when calculating size or angle data of a touch input from the touch input, the failure to recognize the touch input causes inconvenience to the user of the portable terminal. For example, if functions are differently implemented depending on areas of touch inputs, an incorrect recognition of the size of a touch input hinders the portable terminal from smoothly implementing a function desired by the user.

### SUMMARY OF THE INVENTION

Accordingly, it is an aim of embodiments of the present invention to address at least the problems and/or disadvantages described above and to provide at least the advantages described below.

Certain embodiments of the present invention provide a method and apparatus for detecting touches, by which a touch input from a user may be smoothly detected no matter what state a touch-screen is in.

In accordance with an aspect of an embodiment of the present invention, there is provided a method of detecting touches on a touch-screen, the method including detecting a touch input from a user through a touch-screen; generating touch data based on a change in capacitance of the touch-screen caused by the touch input; calculating first data for the touch input using the touch data and a predetermined first threshold; and calculating second data for the touch input using the touch data and a predetermined second threshold.

In accordance with another aspect of an embodiment of the present invention, there is provided an apparatus for detecting touches, the apparatus including a touch sensor arranged to detect a touch input from a user through a touch-screen and to generate touch data based on a change in capacitance of the touch-screen caused by the touch input; and a data extractor arranged to calculate first data for the touch input using the touch data and a predetermined first threshold, and to calculate second data for the touch input using the touch input and a predetermined second threshold.

A further aspect of the invention provides a computer program comprising instructions arranged, when executed, to implement a method and/or apparatus in accordance with any one of the above-described aspects. A further aspect provides machine-readable storage storing such a program.

### BRIEF DESCRIPTION OF THE DRAWINGS

The above and other features and advantages of the present invention will become more apparent from the following detailed description, with reference to the attached drawings, in which:
FIG. 1 is a block diagram of an apparatus for detecting touches, according to an embodiment of the present invention;
FIG. 2 is a flowchart of a method of detecting touches in the apparatus for detecting touches, as shown in FIG. 1;
FIG. 3 is a graph representing touch data resulting from touch inputs detected by the apparatus for detecting touches, shown in FIG. 1; and
FIGS. 4A and 4B represent areas of touch inputs detected by the apparatus for detecting touches, shown in FIG. 1.

### DETAILED DESCRIPTION OF EMBODIMENTS OF THE PRESENT INVENTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

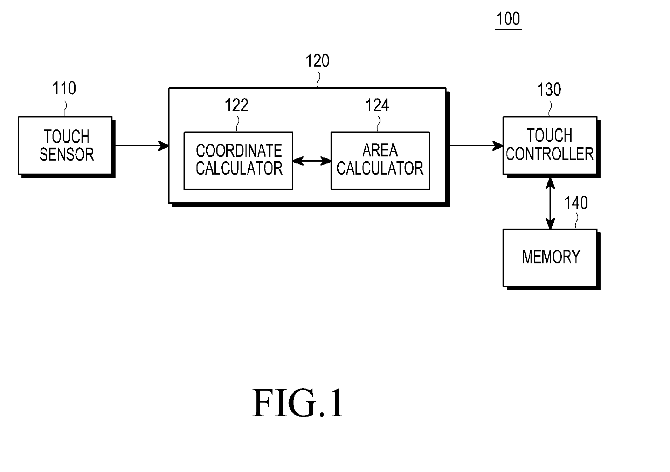

FIG. 1 is a schematic block diagram of an apparatus 100 for detecting touches, according to an embodiment of the present invention.

Referring to FIG. 1, the apparatus 100 includes a touch sensor 110, a data extractor 120, a touch controller 130, and a memory 140.

The touch sensor 110 detects a touch input from a user through a touch-screen (not shown). In the embodiment of the present invention, the touch sensor 110 detects a change in capacitance caused by the user pressing the surface of the touch-screen with his/her finger or with a touch pen. The touch sensor 110 generates touch data based on the detected change of capacitance, i.e., an amount of the change in capacitance. The touch sensor 110 outputs the generated touch data to the data extractor 120.

The touch input detected by the touch sensor 110 includes gestures of the user to cover the entire display screen of the touch screen, a sweep over the left or right of the display screen with the edge of his/her hand, rotation of one or more knuckles on the display screen to the left or right, or the like.

The data extractor 120 extracts coordinates, an area, an angle, etc. of the touch input detected by the touch sensor 110. The data extractor 120 calculates the touch input's coordinates by using a first threshold, and calculates an area and angle of the touch input by using a second threshold. The first and second thresholds are amounts of changes in capacitance of the touch-screen caused by the touch input, with the first threshold being larger than the second threshold.

To perform an action in response to the touch input, a terminal (not shown) equipped with the apparatus 100 has to determine an appropriate action in response to the touch input. The data extractor 120 extracts the coordinates, area, angle, etc., of where the touch input is received from the user on the touch-screen, and delivers them to the touch controller 130, so that the touch controller 130 may determine an action in response to the touch input.

As such, to determine the action of the terminal in response to the touch input, in addition to the touch input's coordinates, its area, angle, etc. are also required. Unlike the coordinates that may be obtained without much difficulty no matter what state the terminal is in, the area or angle of the touch input may be difficult to obtain depending on the state of the terminal. In particular, if the terminal is a floating terminal, the amount of change in capacitance of the touch-screen is less than when the terminal is grounded, and so it is hard to calculate the area or angle to obtain the touch input's coordinates. Considering this, in the embodiments of the present invention, the first threshold is applied to obtain the touch input's coordinates and the second threshold is applied to obtain the area or angle of the touch input. In accordance with embodiments of the present invention, by applying different reference values (the first and second thresholds) for obtaining the coordinates and the area or angle of the touch input, the coordinates as well as the area or angle of the touch input may be correctly calculated.

To do this, the data extractor 120 includes a coordinate calculator 122 and an area calculator 124.

The coordinate calculator 122 extracts the touch input's coordinates. The coordinate calculator 122 calculates the touch input's coordinates using the first threshold. The coordinate calculator 122 calculates the coordinates of a touch input whose touch data generated by the touch sensor 110 is greater than the first threshold, under control of the touch controller 130.

The area calculator 124 extracts the area or angle of the touch input. The area calculator 124 calculates the area or angle of the touch input using the second threshold. The area calculator 124 calculates the area or angle of a touch input whose touch data generated by the touch sensor 110 is greater than the second threshold, under control of the touch controller 130.

The area calculator 124 extracts angle data using a shape of an area whose amount of change in capacitance of the touch-screen is greater than the second threshold. For example, the area calculator 124 calculates an angle of when the user covers the entire display screen of the touch-screen, and/or an angle of an edge of the user's hand sweeping over the left or right of the display screen.

The touch controller 130 controls general operations of the apparatus 100. For example, the touch controller 130 determines an action of the terminal in response to the touch input of the touch-screen, i.e., a function to be implemented in the terminal in response to the touch input.

In an embodiment of the present invention, the touch controller 130 determines whether each touch input corresponding to each touch data generated by the touch sensor 110 is valid. The touch controller 130 determines whether the touch input is valid input data by determining whether each touch data is greater than the first threshold or the second threshold.

The first and second thresholds may be reference values for determining whether the touch input detected by the touch sensor 110 is valid input data. Valid input data means that the touch input detected by the touch sensor 110 is input data to trigger a particular action of a device equipped with the apparatus 100, e.g., a mobile communication terminal.

The touch controller 130 controls the coordinate calculator 122 to calculate coordinates of only touch inputs that correspond to touch data greater than the first threshold, among all touch inputs. The touch controller 130 also controls the coordinate calculator 122 to calculate areas or angles of only touch inputs that correspond to touch data greater than the second threshold among all touch inputs. The touch controller 130 determines that touch inputs that generate touch data greater than the first threshold or the second threshold are valid touch inputs. In an embodiment of the present invention, the touch controller 130 controls the touch sensor 110 to generate touch data only for touch inputs that cause amounts of change in capacitance which are larger than the first threshold or the second threshold. Then, the touch sensor 110 generates touch data only for valid touch inputs.

The memory 140 stores data for controlling general operations of the apparatus 100. The first and second thresholds may be stored in the memory 140, and the touch input's coordinates, area, angle, etc. calculated by the data extractor 120 may also be stored in the memory 140. Actions of the terminal in response to the touch inputs' coordinates, areas, or angles calculated by the data extractor 120 may also be stored in the memory 140. Table 1 represents actions of the terminal in response to touch inputs' coordinates, areas, or angles.

**Table 1**

| Touch data | | | Terminal Actions |
|---|---|---|---|
| Coordinates | Areas | Angles | |
| (111, 116) | 72 | a11 | Action A |
| (222, 232) | 382 | a24 | Action B |
| ... | ... | ... | ... |

The touch controller 130 determines actions of the terminal in response to touch inputs by referring to data as in Table 1 stored in the memory 140. Taking Table 1 as an example, the coordinates of the touch input detected by the touch sensor 110 are (111, 116), the area is 72, and the angle is a11. The touch controller 130 determines the 'Action A' to be an action of the terminal by referring to Table 1 stored in the memory 140.

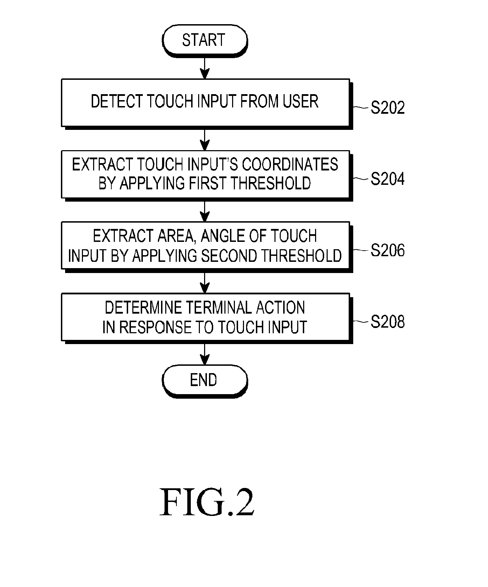

FIG. 2 is a flowchart of a method of detecting touches in the apparatus 100, as shown in FIG. 1.

Referring to FIG. 2, the touch sensor 110 detects a touch input from a user through the touch-screen, in step S202. When a touch input is received from the user, a capacitance change occurring at a spot on the touch-screen corresponding to the touch input is received. The touch sensor 110 generates data for the change in capacitance, i.e., touch data. The touch data may be a magnitude of the change in capacitance.

The touch data generated by the touch sensor 110 is sent to the data extractor 120. The coordinate calculator 122 of the data extractor 120 calculates the touch input's coordinates by applying the first threshold, in step S204. In step S206, the area calculator 124 of the data extractor 120 calculates the area or angle of the touch input received in step S202 by applying the second threshold, in step S206.

Following step S204, i.e., the operation of calculating the touch input's coordinates, the operation of calculating the area or angle of the touch input is performed in step S206. However, in another embodiment, the sequence may be reversed, i.e., step S206 may come first, and step S204 may come next. Alternately, steps S204 and S206 may be performed simultaneously.

In step S208, the touch controller 130 determines an action of the terminal in response to the touch input based on the coordinates, area, or angle of the touch input, calculated in steps S204 and S206.

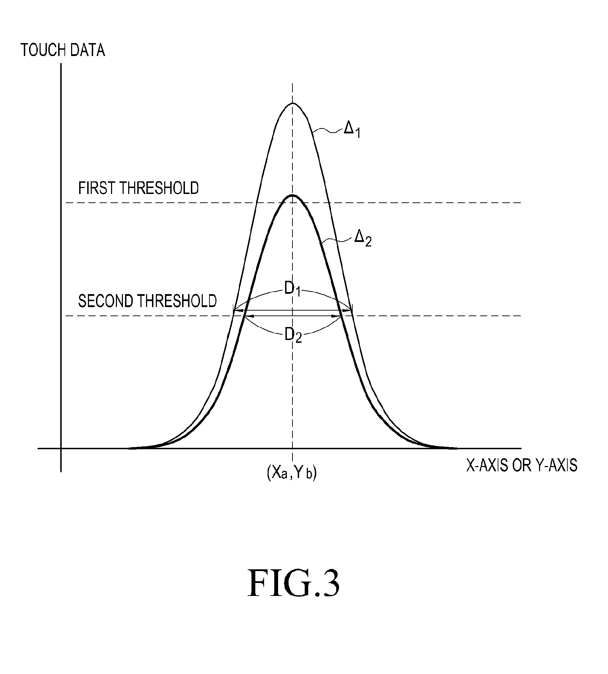

FIG. 3 is a graph representing touch data resulting from touch inputs detected by the apparatus 100, as shown in FIG. 1. FIG. 3 shows touch data resulting from both cases, whereby the touch-screen of the terminal is grounded and floating. The touch inputs corresponding to both touch data are assumed to have the same coordinates and area.

Hereinafter, the touch data when the touch screen is grounded will be referred to as a 'first touch data Δ₁' and the touch data when the touch screen is floated will be referred to as 'second touch data Δ₂'. Also, touch inputs corresponding to the first touch data Δ₁ and the second touch data Δ₂ will be referred to as 'first touch input' and 'second touch input', respectively.

Referring to FIG. 3, a maximum value of the first touch data Δ₁ is greater than a maximum value of the second touch data Δ₂. In other words, the amount of change in capacitance of a touch-screen when the touch screen is grounded is greater than when the touch screen is floating.

As shown in FIG. 3, the coordinates of the first and second touch inputs are the same (Xₐ, Y_{b}). The coordinate calculator 122 of the data extractor 120 applies the first threshold to calculate the coordinates of the first and second touch inputs. The coordinate calculator 122 may calculate the coordinate of a touch input as being the central point of the portion of the touch input above the first threshold. The area calculator 124 of the data extractor 120 applies the second threshold to calculate the areas of the first and second touch inputs.

As shown in FIG. 3, when the touch-screen is grounded, a value of the first touch data Δ₁ is large even compared with the first threshold. Thus, the data extractor 120 may easily calculate the coordinates and the area of the first touch input. However, when the touch-screen is floating, a value of the second touch data Δ₂ is relatively small compared with the first touch data Δ₁. It is not easy for the data extractor 120 to calculate the area of the second touch input, as shown in FIG. 3, when based on the first threshold.

Thus, the apparatus 100 is configured to obtain the coordinates, the area or angle of the touch input, by applying the first threshold to obtain the touch input's coordinates, and second threshold to obtain the area or angle of the touch input.

In FIG. 3, diameters of the first and second touch inputs (for generally circular touch inputs) are shown as 'D₁' and 'D₂', respectively. As shown in FIG. 3, the first and second touch inputs have almost similar diameters. Since the second touch input has a small area that includes touch data greater than the first threshold, the data extractor 120 would have difficulty calculating the area of the second touch input based on the first threshold. On the other hand, once the area of the second touch input is calculated based on the second threshold, it is possible for the data extractor 120 to calculate a similar area to that of the first touch input as area information of the second touch input.

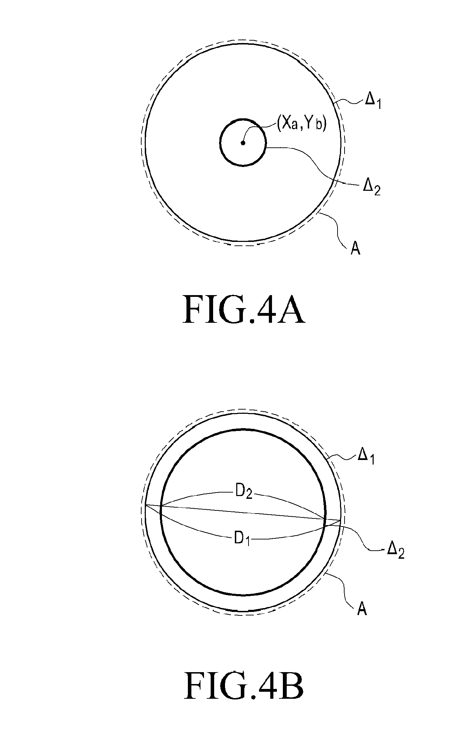

FIGS. 4A and 4B represent the first and second touch inputs shown in FIG. 3. FIG. 4A shows a case where the first threshold is applied to obtain the coordinates of each of the first and second touch inputs, and FIG. 4B shows a case where the second threshold is applied to obtain an area of each of the first and second touch inputs. In FIGS. 4A and 4B, dashed circles A are assumed to be actual areas of touch inputs from the user.

Referring to FIG. 4A, in the case of applying the first threshold, the first touch input corresponding to the first touch data Δ₁ is detected to have an almost similar area to the actual area A of the first touch input. On the other hand, the second touch input corresponding to the second touch data Δ₂ is detected to have much smaller area than that of the actual area A of the second touch input. Since the first threshold is a reference value for obtaining the coordinates of the first and second touch inputs, the data extractor 120 calculates the coordinates (Xₐ, X_{b}) inside the first and second touch inputs only with the areas of the first and second touch inputs.

Referring to FIG. 4B, not only the area of the first touch input corresponding to the first touch data Δ₁, but also the area of the second touch input corresponding to the second touch data Δ₂, is detected to be almost similar to its actual area A. Therefore, the apparatus 100 may efficiently detect the first and second touch inputs by calculating areas of the first and second touch inputs based on the second threshold.

It will be appreciated that embodiments of the present invention can be realized in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the present invention has been particularly shown and described with reference to certain embodiments thereof, it will be understood by those of ordinary skill in the art that various changes in form and details may be made therein without departing from the scope of the present invention as defined by the following claims.

## Claims

1. A method of detecting touches on a touch-screen, the method comprising:
detecting a touch input from a user through a touch-screen;
generating touch data based on a change in capacitance of the touch-screen caused by the touch input;
calculating first data for the touch input using the touch data and a predetermined first threshold; and
calculating second data for the touch input using the touch data and a predetermined second threshold.

2. The method of claim 1, further comprising determining an action of a terminal having the touch-screen in response to the touch input using the first and second data.

3. The method of claim 1, wherein the first threshold is a reference value for calculating coordinates of the touch input; and
wherein the first data comprises the coordinates of the touch input.

4. The method of claim 1, wherein the second threshold is a reference value for calculating at least one of an area and an angle of the touch input; and
wherein the second data comprises at least one of the area and the angle of the touch input.

5. The method of any one of claims 1 to 4, wherein the second threshold is less than the first threshold.

6. An apparatus for detecting touches, the apparatus comprising:
a touch sensor arranged to detect a touch input from a user through a touch-screen and to generate touch data based on a change in capacitance of the touch-screen caused by the touch input; and
a data extractor arranged to calculate first data for the touch input using the touch data and a predetermined first threshold, and to calculate second data for the touch input using the touch input and a predetermined second threshold.

7. The apparatus of claim 6, further comprising a touch controller arranged to control an operation of a terminal having the touch-screen in response to the touch input using the first and second data.

8. The apparatus of claim 7, wherein the first threshold is a reference value for calculating coordinates of the touch input; and
wherein the first data comprises the coordinates of the touch input.

9. The apparatus of claim 8, wherein the touch controller is further arranged to control the touch sensor to generate the touch data only for a touch input that causes the amount of change in capacitance to be greater than the first threshold.

10. The apparatus of claim 7, wherein the second threshold is a reference value for calculating at least one of an area and an angle of the touch input; and
wherein the second data comprises at least one of the area and the angle of the touch input.

11. The apparatus of claim 10, wherein the touch controller is further arranged to control the touch sensor to generate the touch data only for a touch input that causes the amount of change in capacitance to be greater than the second threshold.

12. The apparatus of any one of claims 6 to 11, wherein the second threshold is less than the first threshold.
